# EUROPEAN PATENT APPLICATION

(11) **EP 2 543 523 A1**
(43) Date of publication of application: **09.01.2013**
(21) Application number: 10838388.6
(22) Date of filing: 14.05.2010
(51) Int. Cl.: B60C 23/04, B60R 25/00, B60R 25/10, G08C 17/02

(54) **TIRE PRESSURE MONITORING AND VEHICLE ANTI-THEFT INTEGRATED SYSTEM AND TIRE PRESSURE MONITORING METHOD**

(30) Priority: 10.02.2010 CN 201010116848
(71) Applicant: Steelmate Co., Ltd., Dong Feng Town Zhongshan Guangdong 528425 (CN)
(72) Inventor: LI, Zhitao, Dongfeng Town Zhongshan, Guangdong 528425 (CN)
(74) Representative: Grünecker, Kinkeldey, Stockmair & Schwanhäusser
(86) International application number: PCT/CN2010/072774
(87) International publication number: WO 2011/097846

(57) **Abstract**

The invention provides a tire pressure monitoring-car security integrated system for realizing car security and tire pressure monitoring and method thereof. In the system, a conventional tire pressure monitoring system and car security system are integrated with each other. The learning machine or signal match device of the former is also combined with the remote control portion of the latter. The central monitor portion of the former is combined with the car security host machine of the latter. Control logic and electrical construction thereof is also optimized. Therefore, the invention is reasonable in its design and low cost. In addition, use convenience is also improved and great commercial success may be realized.

## Description

### Field of the Invention

The invention relates to a vehicle security device and more particularly, relates to a tire pressure monitoring-car security integrated system and tire pressure monitoring method.

### Background

In prior art technology, a tire pressure monitoring system and car security system are often separate from each other. The former is generally used to monitor tire pressure of tires of a car so that the drive is able to know in time the tire pressure, thus avoiding potential risks caused by changes of tire pressure; while the latter is mainly to prevent theft and other damages. The above two systems often have no relation in technology with each other.

It is desired for the driver that the car cab has as simple as possible configuration inside. However, the central monitor of the tire pressure monitoring system especially the display and so on is often inevitably installed on the instrument panel, thereby occupying large space of the car cab and also brining adverse effects on appearance of the cab.

The user is used to separate configuration of the tire pressure monitoring system and car security system. However, the inventor of the present invention has recognized that room still remains for improvement of the tire pressure monitoring system. For example, convenience for the user may be enhanced, and connection of the tire pressure monitoring system with the car security system may also be tried to get some good effects.

A conventional car security system generally has a security host machine mounted in the cab and some related peripheral circuits. The security host machine has the function of comprehensive management and transferring information between itself and a remote controller. The sensors of a conventional tire pressure monitoring system are often located in respective tires, while the central monitor is located in the cab. Conventionally, it is necessary for the central monitor to be placed in the cab due to significant consumption of power of the monitor. Recently, a conventional tire pressure monitoring system has been equipped with a learning machine (sometimes called signal match device) which reads out ID feature codes of respective sensors by wireless manner and then sends information regarding correlation between each ID feature code and corresponding sensor to the central monitor so that the information is being set by the monitor. Though the learning machine may be taken with the user, its function is often limited and therefore, it is often not used.

This results in a case in which the driver will not be able to know the tire pressure once he leaves the driving cab. It is always necessary for the driver to walk between the cab and respective tires so as to perform testing process during recognition of the sensor location and related ID feature code by the learning machine. Apparently, prior art technology suffers from some inconveniences.

Separation of the car security system and tire pressure monitoring system not only has adverse influence on internal space utilization rate of the cab but also renders cost increase of the hardware. More importantly, in view of modular design analysis, it is reasonable to combine the two systems together so as to improve integrity of the entire vehicular device.

### SUMMARY OF THE INVENTION

One primary object of the invention is to overcome the above drawbacks and provide a tire pressure monitoring-car security integrated system so as to make the internal electronic devices of the car more integrative, thus reducing cost, improving space utilization rate of the car, and enhancing use convenience for the user.

Another object of the invention is to provide a tire pressure monitoring method capable of simplifying control logic of the vehicular device and enhancing control function of the portable control portion.

To obtain the above objects, a tire pressure monitoring-car security integrated system for realizing car security and tire pressure monitoring is provided. The integrated system includes:

At least one sensor installed inside a tire for detection of the tire pressure of the tire and transmitting the tire pressure data and ID feature code thereof to the outside;

A security detection circuit for detection of the car security status of the car and generation of security signals containing status data;

Tire pressure detection circuit for receiving and detecting tire pressure signals containing tire pressure data of respective sensors;

A control unit for analyzing, processing or packetizing the security signals and tire pressure data so as to form resulted signals and transmit them to the outside; or for receiving control signals so as to set the control unit; and

A remote control unit for providing a human-machine interaction platform, decomposing the resulted signals in order to output the status data and tire pressure data via said human-machine interaction platform; or receiving instructions input by the user through said platform so as to generate the control signals to be transmitted to the outside.

The system further includes an alarm circuit electrically connected with the control unit; said control unit processes the security signals or tire pressure signals to determine whether abnormity occurs by use of the status data or tire pressure data, and then the control unit drives the alarm circuit to generate warning in case abnormity occurs.

The system further includes a latch circuit connected electrically with the control unit; said control unit processes the security signals or tire pressure signals to determine whether abnormity occurs by use of the status data or tire pressure data, and then the control unit drives the latch circuit to disable the start of the car in case abnormity occurs.

The remote control unit also provides a password unit for verifying the password input by the user when operating the human-machine interaction platform.

According to an embodiment of the invention, the human-machine interaction platform includes a number of function buttons corresponding to the same number of sensors; and each function button is capable of generating inducing signals to trigger a corresponding sensor to transmit the tire pressure signals containing said tire pressure data and ID feature code.

The remote control unit receives the tire pressure data and retrieves the ID feature code therefrom and stores the ID feature code in a manner corresponding to a respective function button.

The remote control unit makes the tire pressure data and corresponding ID feature code matched with the home ID feature code after received the resulted signals; a location indication or a corresponding indication of the function button of the related home ID feature code is assigned to the tire pressure data and corresponding ID feature code such that the tire pressure data and corresponding ID feature code are output by said human-machine interaction platform.

The human-machine interaction platform includes a touch-sensitive display which may be used by the remote control unit to provide virtual buttons to realize the function buttons. The remote control unit and control unit are electrically connected with each other via high frequency wireless signals. The human-machine interaction platform includes a number of function buttons corresponding to the same number of the sensors and at least one "send" button; and each function button is capable of generating inducing signals to trigger a corresponding sensor to transmit the tire pressure signals containing said tire pressure data and ID feature code.

The remote control unit receives the tire pressure data and retrieves the ID feature code therefrom and stores the ID feature code in a manner corresponding to a respective function button; said "send" button is capable of transmitting to the outside the control signals containing data regarding the correlation between stored ID feature code and corresponding memory location; The control unit receives the control signals, analyzes the correlation between the ID feature code and memory location; the respective ID feature codes are given location indications and then are stored as a location mapping table; after the tire pressure signals are received and analyzed, the ID feature code contained in the tire pressure signals is matched with the stored location mapping table to obtain a related location indication; and finally the location indication and corresponding tire pressure data are packetized to be resulted signals and then transmitted.

After the resulted signals are received and decomposed by the remote control unit, the location indication or corresponding indication and related tire pressure data are output through said human-machine interaction platform.

According to the invention, a tire pressure monitoring method for monitoring tire pressure of a car by several sensors is provided which includes the steps of:

1) Pre-storing correlation data regarding the correlation between ID feature codes of respective sensors installed in respective tires of the car and corresponding location indications of respective sensors in a remote control unit;

2) Transmitting by a respective sensor tire pressure signals containing the tire pressure data and ID feature code;

3) Transferring the tire pressure signals to the remote control unit by a control unit;

4) Obtaining the tire pressure signals by the remote control unit, matching the ID feature code contained in the tire pressure signals with the correlation data, and outputting the tire pressure data and a related location indication or its corresponding indication.

According to one embodiment, the ID feature codes of respective sensors are stored in different physical addresses each of which is relevant to a specific location indication. The tire pressures signals are analyzed, processed, packetized by the control unit and then are output; and in said step 4), the resulted signals received by the remote control unit are decomposed in advance. Signal transmission is performed among the remote control unit, sensors and control unit by means of high frequency wireless signals.

Compared to prior art technology, the invention possesses the following advantages.

At first, conventional tire pressure monitoring function and car security function are incorporated in the invention, meeting the requirement of modular design. Related hard circuitry is simplified and total cost is reduced due to integration of the control logic. In addition, assembling process is also simplified during assembling period of the system of the invention. Moreover, installation of the system of the invention occupies as little as possible interior space of the car cab and therefore, the system is particularly suited to installation before sale of the total product and suited to production of the car in a larger scale. Furthermore, commercial promotion of the car and the system of the invention is further facilitated.

Secondly, according to the invention, control logic of human-machine interaction portion of a conventional tire pressure monitoring system is moved to a remote control unit, thus causing the remote control unit to function either as the controller and display of a conventional car security system, or as the display and learning machine of a conventional car security system. Therefore, use convenience of the system of the invention is greatly improved. Moreover, the remote control unit may be carried with the user with convenience and hence is easy for the user to find its location. Also, due to long transmission distance of high frequency signals, the user is able to get the information on security status of the car through the remote control unit even located far away from the car.

Thirdly, application of the system and method of the invention simplifies the control logic of a conventional tire pressure monitoring system by moving the control logic of a central monitor to the remote control unit. As such, the remote control unit is able to recognize different sensors and locations thereof. In this case, all the setting may be performed at once with the help of the remote control unit either in normal use or testing period of the system of the invention without movement of the user between the car cab and respective tires.

In addition, function of tire pressure monitoring is enhanced by combination of the tire pressure monitoring and car security monitoring. The car may be deactivated in case that abnormal tire pressure is detected, thus keeping the car always in a safer condition.

Furthermore, as an integrated system, the invention provides comprehensive function. Compared to two separate systems not integrated with each other, the integrated system of the invention is more cost-effective, and is more possible to stimulate the purchase desire of the consumer. Accordingly, greater commercial success may be expected.

Other advantages and novel features will be drawn from the following detailed description of embodiments with attached drawings, in which:

### BRIEF DESCRIPTION OF THE DRAWINGS

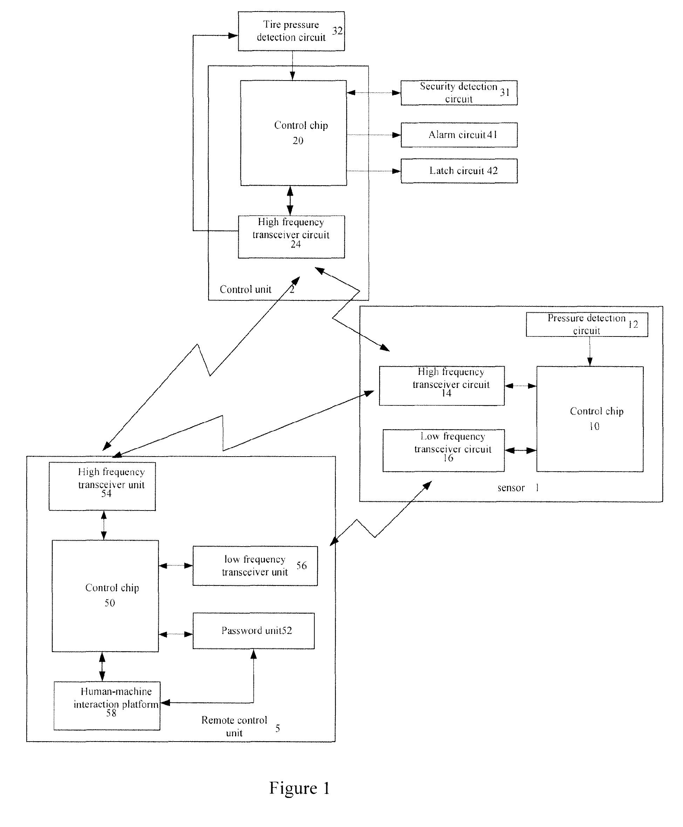

Figure 1 shows a schematic circuit diagram of a tire pressure monitoring-car security integrated system according to an embodiment of the invention.

### DETAILED DESCRIPTION

The invention is further described below in conjunction with the accompanying drawings and various embodiments.

Referring to figure 1, in terms of control logic, the tire pressure monitoring-car security integrated system of the invention include a portion with the function of a conventional tire pressure monitoring system and another portion with the function of a conventional car security system. In terms of electrical configuration, the tire pressure monitoring-car security integrated system of the invention has a vehicular device mounted on the car and a portable remote control unit 5. The vehicular device includes a control unit 2 and at least a sensor 1, a security detection circuit 31, a tire pressure detection circuit 32, an alarm circuit 41 and a latch circuit 42, all of which are electrically connected with the control unit 2.

The number of the sensors 1 is corresponding to the number of the tires of the car. For example, there will be four sensors 1 if there are four car tires. It is noted that the sensor 1 may be a conventional sensor. Each sensor 1 is used for sensing gas pressure inside the car tire, and mainly includes a control chip 10, a pressure detection circuit 12, a high frequency transceiver circuit 14 and a low frequency transceiver circuit 16. The tire pressure is detected firstly by the pressure detection circuit 12 and then is transmitted as electrical signal to the control chip 10. The electrical signal is caused to be combined with the ID feature code of the sensor to form new tire pressure signal and then, the control chip 10 controls the electrical signal to be transmitted to the outside space through the high frequency transceiver circuit 14 so that the signal is further processed by the control unit 2. Whether the tire pressure value exceeds a predefined value is determined by the control unit 2. The low frequency circuit 16 of the sensor 1 has the function of receiving low frequency inducing signals generated by operation of the remote control unit 5 by the user. Then, the inducing signals are processed by the control chip 10. Specifically, the control chip 10 generates a signal containing ID feature code of the sensor 1 according to the low frequency inducing signals and then, the signal generated by the chip 10 is sent out through the high frequency transceiver circuit 14. Next, the signal is stored in the remote control unit 5 so as to be provided to the control unit 2. The signals generated by the sensor 1 are sent by the high frequency transceiver circuit 14, and these signals normally contain ID feature code of the sensor 1 and current tire pressure of the present tire.

The security detection circuit 31 can be found in a normal car security system, and the circuit 31 detects at least one security status of the car, obtains the status data, and then transmits the data as electric signals to the control unit 2 so as to be used. The security status of the car is detected by the circuit 31 may be implemented by various sub-circuits (not shown). Illustrative security statuses may include locking status of the side door, status of foot brake, status of power, status of hand brake, status of windows, status of automobile lamp, status of vibration and the like. All of the above statuses may be realized by kinds of circuits and therefore, the security circuit 31 is able to be connected with these circuits by various detection methods, thereby forming kinds of sub-circuits for detection of different statuses of the car. These sub-circuits form the security detection circuit 31 of the invention. As such, the many statuses of the car can be detected. The data corresponding to the above statuses may be transmitted as electrical signals (called security signals) to the control unit 2 so as to be further processed.

The tire pressure detection circuit 32 receives through the high frequency transceiver circuit 24 of the control unit 2 the tire pressure signals which include tire pressure data and ID feature codes transmitted to the outside by the sensors 1, and then detects the signals. After received the tire pressure signals from different tires, the circuit 32 analyzes the signals and compares them with safe values of the tire pressure and temperature preset by the system itself. If the signals exceed the safe values, then abnormal tire pressure data is sent through the high frequency transceiver circuit to the control unit. After that, the abnormal tire pressure data is further processed by said alarm circuit or that of the remote control unit. Additionally, the tire pressure detection circuit 32 may also be integrated with the control unit 2 which will be described below. Therefore, the circuit 32 directly processes the signals of the circuit 24 and the signals are directly transmitted to the control unit 2 by the circuit 32.

The control unit 2 includes a control chip 20 and a high frequency transceiver circuit 24.

The high frequency transceiver circuit 24 of the control unit 2 is either used for transferring signals between itself and the sensors 1 or used for transferring signals between itself and the remote unit 5. The tire pressure detection circuit 32 is also coupled electrically with the high frequency transceiver circuit 24. The signals received by the circuit 32 are forwarded by the circuit 24. In other words, the circuit 32 receives the tire pressure signals of the sensors 1 via the circuit 24.

The control chip 20 of the control unit 2 has relatively complicated control logic, and has the following functions. At first, it receives security signals including status data from the security detection circuit 31 and analyzes and processes in advance the security signals. For example, when related status data is obtained by analysis and it is recognized from the status data that the car is in vibration status, control signals may be sent to the alarm circuit 41 of the invention so as to inform this status to the user. Take another example, when analysis shows that the car is in intrusion status, a control signal may be transmitted to drive the latch circuit 42 to lock the car, thus preventing theft of the car. Secondly, the control chip 20 receives the control signals from the remote control unit 5 through the high frequency transceiver circuit 24, and analyzes the control signals. When existence of the control signals, which include setting instructions for setting correlation between the location and ID feature code (this correlation may be embodied as a location mapping table), is determined, a new location mapping table is established or a home location mapping table is updated, thus finishing setting of the control unit 2. Thirdly, the control chip 20 receives the tire pressure data from the tire pressure detection circuit 32, retrieves the tire pressure data and ID feature code, looks up the location mapping table representing the correlation between the ID feature code and a corresponding location, and determines the correlation between the tire pressure data and location. Finally, the control chip 20 functions to pack the correlation date between the tire pressure data of the tire pressure signals and location, and status data of various security statuses of the car, and then transmit the packed data by the high frequency transceiver circuit 24. The control chip 20 plays an important role in the control unit 2. In other words, the control unit 2 is mainly constructed of the control chip 20 and the high frequency transceiver circuit 24. The control unit 2 of the invention cooperates with other peripheral circuits to realize total management of the host machine.

As described above, when the control unit 2 processes the security signals or tire pressure signals, control logic built into the control unit 2 makes judgment as to whether the car is in a safe condition by analyzing the status data and tire pressure data (including security status of the security detection circuit 31 and tire pressure status generated by the tire pressure detection circuit 32). When it is judged that the car is in an abnormal condition, the control unit 2 will transmit the signals to the alarm circuit 41 so as to generate warning indications. These warning indications may take any form such as flashing of the lamp, warning chime, vibration or the like. Similarly, the alarm circuit may also be disposed into the remote control unit. In this case, the signals originating from the control unit 2 are used as driving signals.

As described above, when the control unit 2 processes the security signals, the latch circuit 42 judges whether the car is in abnormal condition by analysis of the status data. When it is judged that abnormal condition occurs, the latch circuit 42 is driven to stop the car. For example, the power and oil circuit of the car may be cut off, or the foot brake may be deactivated.

The remote control unit 5 specifically includes a control chip 50, a human computer interaction platform 58, a password unit 52, a low frequency transmission unit 56 and a high frequency transceiver unit 54, all of which are electrically connected with said control chip 50.

The human computer interaction platform 58 is preferably a touch-sensitive display and may include simultaneously input and output function. Under the control of the chip 50, the platform 58 has two display modes. In one display mode, when the remote control unit 5 is employed to learn ID feature code of the sensor 1, the platform 58 will generate some virtual buttons for example function buttons and a send button and provide them to the user for operation. In another mode, the platform 58 displays various security statuses and tire pressure data of the car, and may be helpful to set and control the control unit 2. For example, instruction for changing certain security status of the car may be input. Shift between the two modes may be implemented generally by a display mode shifting button such as a hard button of the remote control unit 5, or a virtual button (soft button) of the human computer interaction platform 58. The key point is to generate by the hard button or virtual button signals that can be recognized by the control chip 50. Accordingly, the control chip 50 is able to shift display mode of the platform 58.

The low frequency transceiver unit 56 is under the control of the chip 50 of the remote control unit 5, and is intended for generating low frequency inducing signals to be sent to the sensors 1, thus the sensors 1 being induced to transmit by its high frequency transceiver circuit 14 the tire pressure signals containing tire pressure data and ID feature codes.

The high frequency transceiver unit 54 serves to transmit the control signals (generally, the control signals are produced by the use who inputs the instructions via said platform 58) generated by the chip 50 of the remote control unit 5 so that the signals will be captured by the high frequency transceiver circuit 24 of the control unit 2, and finally be provided to the control chip 20 of the control unit 2. At the same time, the unit 54 also functions to receive resulted signals from the unit 2 and then transmit them to the chip 50 of the remote control unit 5 to be further processed.

The password unit 52 uses the human computer interaction platform 58 as the input and output interface used by the user. Under the control of the control chip 50 of the remote control unit 5, the password unit 52 may perform password verification before use of the remote control unit 5 by the user. The password unit 52 may also deemed as separate control logic of the control chip and integrated into the control chip 50 of the remote control unit 5. The detailed implementation of the password unit 52 is well known in the art and therefore, detailed description thereof is omitted.

The control chip 50 of the remote control unit 5 is used to perform comprehensive management of the unit 5. When the user presses the display mode shifting button to enter into security status matching with the sensor's ID feature code, the chip 50 will provide by the platform 58 a number of function buttons to the user for operation, the number of the function buttons being the same as that of the sensors 1. The user places the remote control unit 5 near a sensor 1 located at the front left side of the car and then presses one of the function buttons for example a "front left" button. Next, the chip 50 of the remote control unit 5 receives the instructions sent by the above button and then, drives the low frequency transmission unit 56 to transmit the inducing signals to the outside. After a corresponding sensor 1 received the inducing signals, the control chip 10 of the sensor 1 is triggered to transmit through its high frequency transceiver circuit 14 the tire pressure signals including tire pressure data and ID feature code to the outside. The control chip 50 of the remote control unit 5 obtains the above tire pressure signals through its high frequency transceiver unit 54, analyzes the signals and finally recognizes the ID feature code of the sensor 1. Subsequently, the ID feature code of the sensor 1 is stored in a memory LF. Similarly, a "right front" button may be utilized to get the ID feature code of the sensor 1 located at the right front side of the car and then store it in a memory RF. A "left rear" button may be utilized to get the ID feature code of the sensor 1 located at the left rear side of the car and then store it in a memory LR. A "right rear" button may be utilized to get the ID feature code of the sensor 1 located at the right rear side of the car and then store it in a memory RR. It is noted that these signs such as LF, RF, LR and RR may be regarded as variables representing memory addresses or pointers of the memory addresses, and the ID feature codes of the all of the sensors must be consistent with these memory addresses. As such, respective ID feature code of respective sensor may be stored in a manner corresponding to respective function button. Accordingly, ID feature code of different sensor 1 is stored in different physical address. The control chip of the remote control unit 45 guides the user by the readable indicative function of the human machine interaction platform 58 to finish various operations. Specifically, a location mapping table regarding the correlation between the ID feature code of a particular sensor 1 and memory location thereof is created in the remote control unit 5. As the memory location also represents the physical location of a sensor 1 with respect to the car, a location mapping table regarding correlation between the ID feature code of the sensor 1 and its physical location is also created. As a result, when a "send" button predefined in the platform 58 is pressed by the user, the control chip 50 will recognize the signals sent by the button and then, the location mapping table in form of control signals is transmitted to the control unit 2 through the circuit 54 of the unit 5. The control chip 50 of the control unit 2 receives the location mapping table by its high frequency transceiver circuit 24 and then stores it in home memory so as to realize creation or update of the location mapping table.

When the user presses the display mode shifting button to enter into normal security signal and tire pressure signal status, the control chip 50 of the remote control unit 5 will firstly decompose the data packet which is the result of packetization of security signal data and tire pressure signal data by the control chip 20 of the control unit 2. Then, the status data and tire pressure data and ID feature code contained in the resulted signals are processed by the control chip 50. The above processing is well known in the art and accordingly, description thereof is not provided in this specification. With regard to processing of the tire pressure data and ID feature code, it should be noted that the correlation between the tire pressure data of respective sensors and their location relative to the car has been established according to the home location mapping table when the control chip 20 of the control unit 2 is processing the tire pressure data, the resulted signals received by the remote control unit 5 also contain this correlation data. Resultantly, the tire pressure data and corresponding location is controlled by the chip 50 of the unit 5 so as to be displayed through the human machine interaction platform 58.

To facilitate reading of the user, the location indications may be transformed into intelligent literal indications or figures before they are output and displayed. Here, the literal indications and figures may be regarded as readable indications after analysis of the vehicular location indications, and these readable indications are also corresponding to the location indications. The difference between the location indications and their corresponding indications lies in that the former is machine-readable and not human-readable. These location indications must be analyzed by the control chip 50 of the remote control unit 5 so as to be transformed into corresponding indications such as LF, RF, LR, RR or other physical address indicators. By contrast, the corresponding indications are human-readable, and are obtained by recognition of the location indications by the chip 50 of the unit 5. These corresponding indications may take the form of pictogram or word. For example, the above-mentioned indication LF is explained as left front location, while RR is explained as right rear location.

The kinds of control chips (10, 20 and 50) presented in the specification of the present application may be embodied as single chip microcomputers. Publicly, a single chip microcomputer contains a memory component and accordingly, various memories used in present invention may be embodied as the memory components described above. Accordingly, in the above embodiments, these memories are not discussed in more great detail since they are well known in the art.

In the above embodiments, both tire pressure monitoring function and car security function are realized in a single system by coordination among the sensors 1, control unit 2 and remote control unit 5.

Also, in the above embodiments, it is needed to deliver the location mapping table obtained by the remote control unit 5 to the control chip 20 of the control unit 2 and store it into the chip 20. This results somewhat inconvenience to the user and accordingly, another improved embodiment is provided. This improved embodiment is described below.

In this embodiment, no structure is provided to the chip 50 of the unit 5 for transmitting the location mapping table stored at home to the control unit 2. Correspondingly, the location mapping table is not stored in the chip 20 of the control unit 2 and therefore, when tire pressure signals containing tire pressure data and ID feature code is received by the control chip 20, the chip 20 will not process the tire pressure signals. What the chip 20 only does is to make the tire pressure signals and security signals containing status data packeted and then send the packeted signals to the remote control unit 5. The resulted signals containing tire pressure signals coming from the control unit 2 are gotten by the remote control unit 5 and then the signals are decomposed by the control chip 50 thereof. Next, the tire pressure data and ID feature code contained therein are matched with the location mapping table stored at home so that definite correlation is formed between the tire pressure data and memory location of corresponding function button. In this case, the memory location is also recognized by the chip 50 of the unit 5 as a location indication. As each physical location is solely related to a location indication and therefore, each set of tire pressure data has sole location indication related thereto. The correlation may be controlled by the chip 50 and displayed through the platform 58. With reference to previous embodiments, the location indication may also be formatted to be human-readable indication before being output.

It can be understood that the above two embodiments have different tire pressure monitoring methods with regard to the control logic of the tire pressure monitoring. The difference lies in that the former puts the function of analysis of the correlation between the tire pressure data and location of the corresponding sensor into the control unit 2, while the latter puts it into the remote control unit 5. As can be seen, the latter is significantly better than the former and is more convenient to test the location information of the respective sensors.

Also, it can be seen high frequency signals are transmitted between the control unit 2 and remote control unit 5, or between the unit 5 and sensor 1, or between the sensor 1 and control unit 2. Due to long transmission distance of high frequency signals, the user is able to get the information on security status of the car through the remote control unit 5 even located far away from the car.

Summarily, in the present invention, conventional tire pressure monitoring function and car security function are effectively combined. In addition, the design of the system of the invention is reasonable, the cost of the system is reduced, and usage convenience is also enhanced. By the invention, great commercial success may be expected.

## Claims

1. A tire pressure monitoring-car security integrated system for realizing car security and tire pressure monitoring, comprising:
At least one sensor installed inside a tire for detection of the tire pressure of the tire and transmitting the tire pressure data and ID feature code thereof to the outside;
A security detection circuit for detection of the car security status of the car and generation of security signals containing status data;
Tire pressure detection circuit for receiving and detecting tire pressure signals containing tire pressure data of respective sensors;
A control unit for analyzing, processing or packetizing the security signals and tire pressure data so as to form resulted signals and transmit them to the outside; or for receiving control signals so as to set the control unit; and
A remote control unit for providing a human-machine interaction platform, decomposing the resulted signals in order to output the status data and tire pressure data via said human-machine interaction platform; or receiving instructions input by the user through said platform so as to generate the control signals to be transmitted to the outside.

2. The tire pressure monitoring-car security integrated system according to claim 1, further comprising an alarm circuit electrically connected with the control unit; said control unit processes the security signals or tire pressure signals to determine whether abnormity occurs by use of the status data or tire pressure data, and then the control unit drives the alarm circuit to generate warning in case abnormity occurs.

3. The tire pressure monitoring-car security integrated system according to claim 1, further comprising a latch circuit connected electrically with the control unit; said control unit processes the security signals or tire pressure signals to determine whether abnormity occurs by use of the status data or tire pressure data, and then the control unit drives the latch circuit to disable the start of the car in case abnormity occurs.

4. The tire pressure monitoring-car security integrated system according to claim 1, wherein the remote control unit also provides a password unit for verifying the password input by the user when operating the human-machine interaction platform.

5. The tire pressure monitoring-car security integrated system according to claim 1, wherein the human-machine interaction platform includes a number of function buttons corresponding to the same number of sensors; and each function button is capable of generating inducing signals to trigger a corresponding sensor to transmit the tire pressure signals containing said tire pressure data and ID feature code;
The remote control unit receives the tire pressure data and retrieves the ID feature code therefrom and stores the ID feature code in a manner corresponding to a respective function button;
The remote control unit makes the tire pressure data and corresponding ID feature code matched with the home ID feature code after received the resulted signals; a location indication or a corresponding indication of the function button of the related home ID feature code is assigned to the tire pressure data and corresponding ID feature code such that the tire pressure data and corresponding ID feature code are output by said human-machine interaction platform.

6. The tire pressure monitoring-car security integrated system according to claim 5, wherein the human-machine interaction platform includes a touch-sensitive display which may be used by the remote control unit to provide virtual buttons to realize the function buttons.

7. The tire pressure monitoring-car security integrated system according to claim 5, wherein the remote control unit and control unit are electrically connected with each other via high frequency wireless signals.

8. The tire pressure monitoring-car security integrated system according to claim 1, wherein the human-machine interaction platform includes a number of function buttons corresponding to the same number of the sensors and at least one "send" button; and each function button is capable of generating inducing signals to trigger a corresponding sensor to transmit the tire pressure signals containing said tire pressure data and ID feature code;
The remote control unit receives the tire pressure data and retrieves the ID feature code therefrom and stores the ID feature code in a manner corresponding to a respective function button; said "send" button is capable of transmitting to the outside the control signals containing data regarding the correlation between stored ID feature code and corresponding memory location;
The control unit receives the control signals, analyzes the correlation between the ID feature code and memory location; the respective ID feature codes are given location indications and then are stored as a location mapping table; after the tire pressure signals are received and analyzed, the ID feature code contained in the tire pressure signals is matched with the stored location mapping table to obtain a related location indication; and finally the location indication and corresponding tire pressure data are packetized to be resulted signals and then transmitted.
After the resulted signals are received and decomposed by the remote control unit, the location indication or corresponding indication and related tire pressure data are output through said human-machine interaction platform.

9. The tire pressure monitoring-car security integrated system according to claim 8, wherein the human-machine interaction platform includes a touch-sensitive display which may be used by the remote control unit to provide virtual buttons to realize the function buttons.

10. The tire pressure monitoring-car security integrated system according to claim 8, wherein the remote control unit and control unit are electrically connected with each other via high frequency wireless signals.

11. A tire pressure monitoring method for monitoring tire pressure of a car by several sensors, comprising the steps of:
1) Pre-storing correlation data regarding the correlation between ID feature codes of respective sensors installed in respective tires of the car and corresponding location indications of respective sensors in a remote control unit;
2) Transmitting by a respective sensor tire pressure signals containing the tire pressure data and ID feature code;
3) Transferring the tire pressure signals to the remote control unit by a control unit;
4) Obtaining the tire pressure signals by the remote control unit, matching the ID feature code contained in the tire pressure signals with the correlation data, and outputting the tire pressure data and a related location indication or its corresponding indication.

12. The tire pressure monitoring method according to claim 11, wherein in step 1), the ID feature codes of respective sensors are stored in different physical addresses each of which is relevant to a specific location indication.

13. The tire pressure monitoring method according to claims 11 or 12, wherein in step 3), the tire pressure signals are analyzed, processed, packetized by the control unit and then are output; and in said step 4), the resulted signals received by the remote control unit are decomposed in advance.

14. The tire pressure monitoring method according to claim 13, wherein signal transmission is performed among the remote control unit, sensors and control unit by means of high frequency wireless signals.
